# EUROPEAN PATENT SPECIFICATION

(11) **EP 1 363 830 B1**
(45) Date of publication and mention of the grant of the patent: **25.11.2009**
(21) Application number: 02704207.6
(22) Date of filing: 23.01.2002
(51) Int. Cl.: B62K 3/00, B62K 11/00

(54) **SCOOTER**
SCOOTER
TROTTINETTE

(30) Priority: 09.02.2001 US 780639
(43) Date of publication of application: 26.11.2003
(73) Proprietor: MATTEL, INC., El Segundo, CA 90245-5012 (US)
(72) Inventor: HUNTSBERGER, Kurt, J., Chaffee, NY 14030 (US); HOWELL, William, R., Chaffee, NY 14030 (US)
(74) Representative: Harrison Goddard Foote
(86) International application number: PCT/US2002/001751
(87) International publication number: WO 2002/064420

(56) References cited:
- EP-A- 0 025 960
- US-A- 4 750 578
- US-A- 4 750 578
- US-A- 5 183 129
- US-A- 5 848 660
- US-A- 5 848 660
- US-A- 5 894 898

## Description

### Field of the Invention

The present invention relates generally to battery-powered vehicles, and more particularly to battery-powered scooters.

### Background of the Invention

Battery-powered vehicles come in many shapes and sizes. A popular type of battery-powered vehicle is a children's ride-on vehicle, which has a child-sized body that is powered by a battery-powered motor assembly controlled by a child sitting in the vehicle's passenger compartment. Typically, children's ride-on vehicles either resemble reduced-scale versions of vehicles used by adults, or they resemble fantasy vehicles that do not have a full-sized counterpart.

Another type of battery-powered vehicle is a vehicle that may be used by children or adults and which provides a source of battery-powered transportation. One example of such a vehicle is a scooter.

US Patent No. 5848660 discloses a scooter according to the preamble of present claim 1, and in particular discloses a collapsible scooter which includes a collapsible strut which can be placed in an upright position when in use or a compressed position when stored.

US Patent No. 5894898 discloses an electric motor scooter which can derive its motive energy from either a solar-electric array on the vehicle or an independent source of electric power.

### Summary of the Invention

The present invention is directed to a battery-powered scooterA scooter comprising a body with a riding surface adapted to support a rider, a steering assembly rotationally mounted on the body and coupled to a steerable wheel; a rear wheel assembly including a drive wheel rotationally mounted on the body, a drive assembly including a motor assembly with a rotational output coupled to the drive wheel by a drive linkage and a battery assembly adapted to power the motor assembly, wherein the drive linkage includes a belt extending around portions of the rear wheel assembly and the output of the motor assembly to drive the rotation of the rear wheel assembly responsive to rotation of the output of the motor assembly; and
a cover assembly characterized in that the cover assembly is adapted to shield the drive linkage such that the drive linkage is inaccessible to physical contact by the rider or other individual, and further wherein the cover assembly encloses the belt to prevent access thereto from external the scooter by a rider's fingers.

The scooter has a body with a footboard upon which a rider may stand while riding the scooter, and a steering mechanism that is used to steer the scooter. The scooter further includes a drive assembly with a battery-powered motor assembly adapted to drive at least one of the scooter's wheels. In some embodiments, the scooter further includes a cover assembly adapted to prevent a user's body from contacting portions of the drive assembly. In some embodiments, the scooter includes a storage compartment beneath its riding surface.

### Brief Description of the Drawings

Fig. 1 is an isometric view of a scooter constructed according to the present invention.
Fig. 2 is a top plan view of the scooter of Fig. 1.
Fig. 3 is an isometric view of the frame and steering mechanism of the scooter of Fig. 1.
Fig. 4 is a front elevation view of the scooter of Fig. 1.
Fig. 5 is an exploded, partially cross-sectional view of the front wheel assembly of Fig. 1.
Fig. 6 is a fragmentary cross-sectional view of a portion of a suitable steering assembly for the scooter of Fig. 1.
Fig. 7 is a fragmentary isometric view of the steering mechanism of the scooter of Fig. 1.
Fig. 8 is a fragmentary side elevation view of a suitable brake mechanism for use with the scooter of Fig. 1.
Fig. 9 is a schematic block diagram of a suitable drive assembly for the scooter for Fig. 1.
Fig. 10 is an isometric view of the scooter of Fig. 1 with the footboard detached from the body of the scooter.
Fig. 11 is a fragmentary rear elevation view of the scooter of Fig. 1 with a cover portion of the body removed.
Fig. 12 is a fragmentary left side elevation view of the scooter of Fig. 1 with a cover portion of the body removed.
Fig. 13 is a fragmentary rear side elevation view of the scooter of Fig. 1 with a cover portion of the body removed.
Fig. 14 is a fragmentary rear elevation view of the scooter of Fig. 11 with the cover portion attached.
Fig. 15 is a fragmentary left side elevation view of the scooter of Fig. 12 with the cover portion attached.
Fig. 16 is a fragmentary right side elevation view of the scooter of Fig. 13 with the cover portion attached.

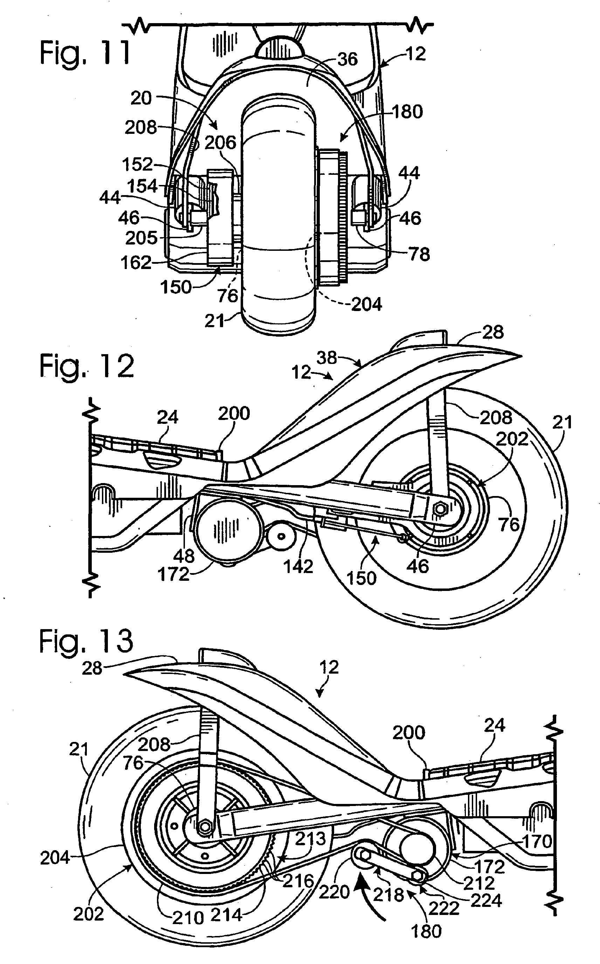

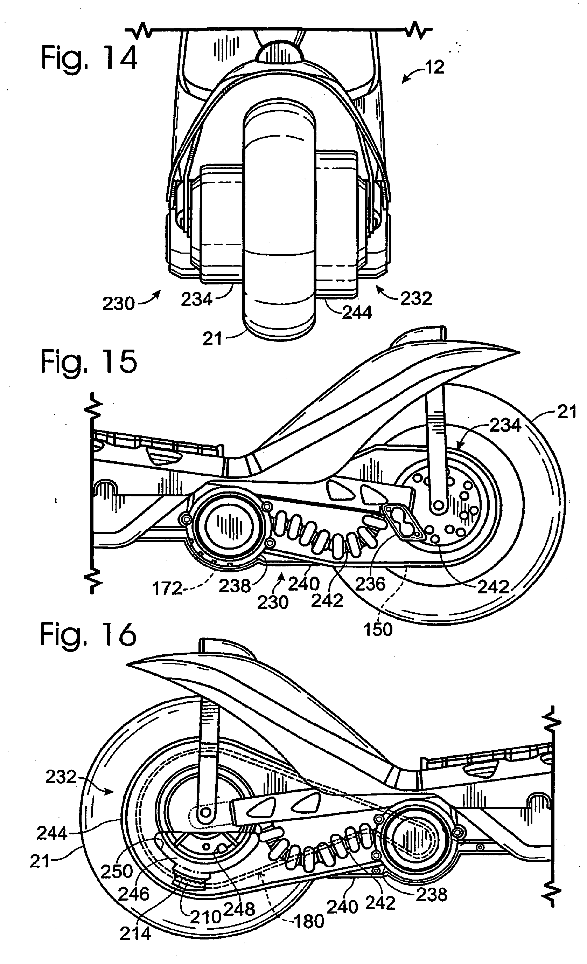

Figures 11 to 13 illustrate the scooter with the cover portions removed in order to show various underlying details. (Figures 14 to 16 show the same scooter with the cover portion attached

### Detailed Description and Best Mode of the Invention

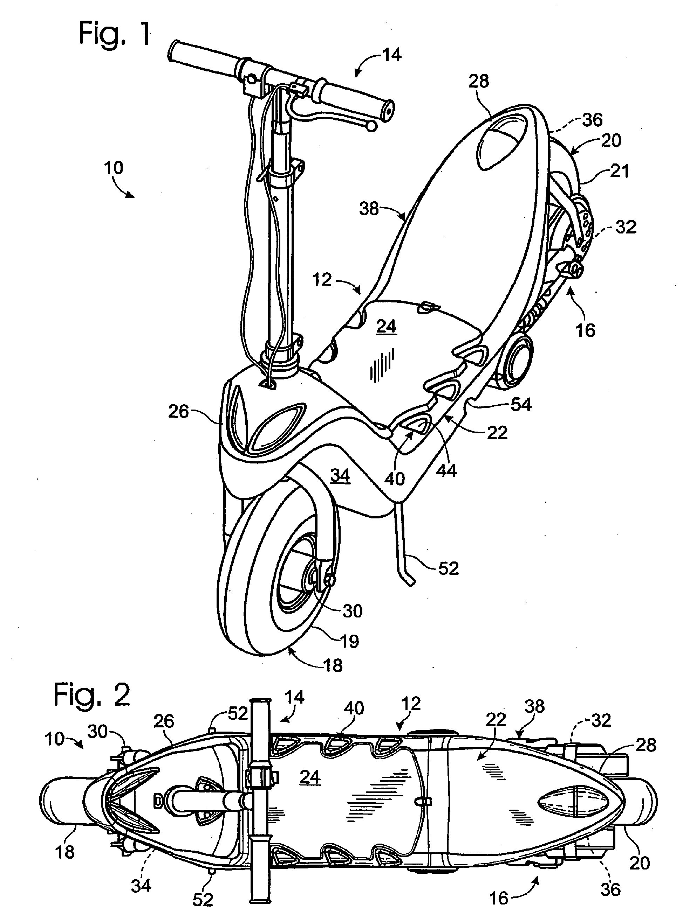

A battery-powered scooter constructed according to the present invention is shown in Figs. 1 and 2 and generally indicated at 10. Scooter 10 includes a body 12, a steering assembly 14, and a drive assembly 16. Scooter 10 further includes a front wheel assembly 18 and a rear wheel assembly 20. As shown, each wheel assembly includes a single wheel, namely, front wheel 19 and rear wheel 21. It should be understood that other configurations are possible, including a pair of front wheels and/or a pair of rear wheels. At least one of the wheels is a driven wheel that is rotationally driven by the scooter's drive assembly, and at least one of the wheels is a steerable wheel that is steered by rider-inputs to the scooter's steering assembly. In Figs. 1 and 2, the steerable wheel is the scooter's front wheel, and the driven wheel is the scooter's rear wheel.

Scooter 10 is designed to be ridden by a rider, who is supported on the scooter's body 12. In some embodiments of the invention, scooter 10 may be sized for use by a child. However, it is within the scope of the invention that scooter 10 may additionally or alternatively be sized for use by teenagers and/or adults. Body 12 provides a riding surface 22 upon which a rider, such as a child, may stand when operating the scooter. As shown in Fig. 1, riding surface 22 includes a footboard 24 upon which a rider stands while operating the scooter. It should be understood, however, that riding surface 22 may have other configurations, including configurations that provide a seat upon which a rider may sit while operating the scooter.

In the illustrated embodiment, body 12 further includes forward and rearward portions 26 and 28 that at least partially shield the scooter's wheel assemblies 18 and 20 from contact with a rider while the rider is on riding surface 22. As perhaps best seen in Fig. 2, the forward and rearward portions in the illustrated embodiment respectively extend forward and rearward of the axles 30 and 32 upon which wheels 19 and 21 are mounted, as well as projecting laterally from the wheels. Portions 26 and 28 may also be described as providing surfaces 34 and 36 that deflect water, mud and other substances from contacting the rider's body if these substances are urged toward the rider's body by the scooter's wheels during operation of the scooter. In essence, portions 26 and 28 provide a form of mudguard or splashguard. It should be understood, however, that body 12 may have a variety of configurations, and that scooter 10 may be constructed without the above-described geometry and guard structure.

Because body 12 is adapted to support a rider operating the scooter, it should be formed of a material or combination of materials having sufficient strength to support the weight of the intended rider and the forces encountered during operation of the scooter. Examples of suitable materials include metal and plastic, but any suitable material or combination of materials may be used. In the illustrated embodiment, body 12 includes a housing 38 formed of molded plastic and a frame 40 formed of metal. It is within the scope of the invention, however, that the body may be entirely formed of metal, plastic or another suitable structural material, and that the body may itself provide sufficient support for the rider or that the body may include an integral frame.

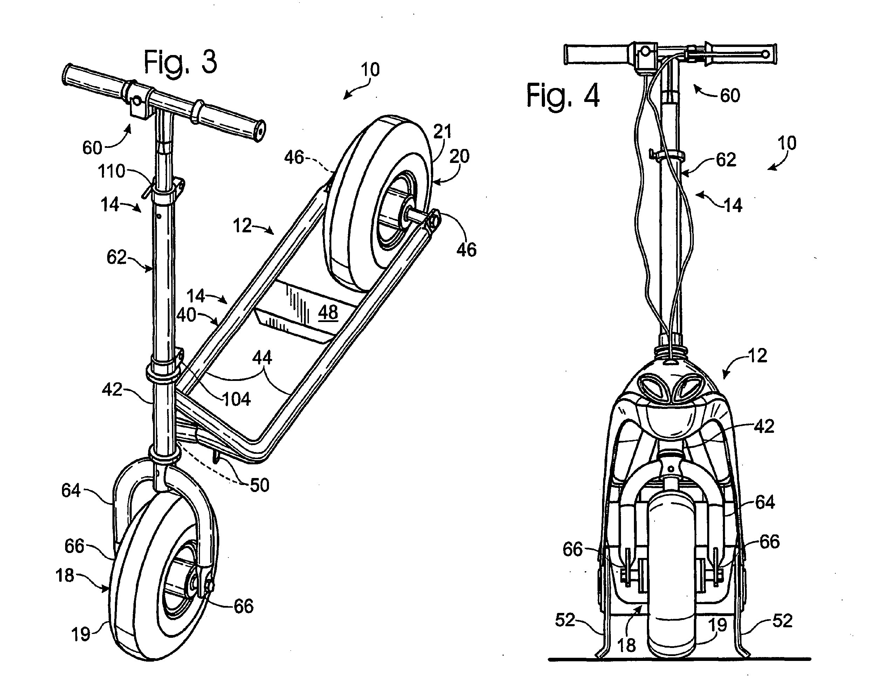

Frame 40 provides a chassis, or support structure, for the scooter's housing 38, and as discussed, may be separately formed from the rest of the body or integrally formed with the body. For purposes of illustration, a separately formed frame is shown in the figures, and is perhaps best seen in Fig. 3. As shown, frame 40 includes a head tube 42, which couples the rest of the frame and/or the body to steering assembly 14. From head tube 42, frame 40 further includes a pair of laterally spaced supports 44 that extend from the head tube and terminate at mounts 46 for rear wheel assembly 20. A motor mount 48 extends between supports 44 to provide a mounting surface for the scooter's motor assembly, which is discussed in more detail subsequently. Also shown in Fig. 3 is one of a pair of forward housing mounts 50 that receive a suitable fastener, such as a rivet, screw, clip or the like, to secure the housing and frame together near head tube 42. It should be understood that any or all of the components of frame 40 may alternatively be formed as a portion of housing 38 or otherwise formed as a portion of body 12.

By referring briefly back to Fig. 1, portions of supports 44 are visible through housing 38 and project rearward therefrom. Also shown in Fig. 1 is a kickstand 52 that is adapted to support the scooter in a generally upright configuration when the scooter is not being driven. Kickstand 52 may be any suitable retractable mechanism for providing three- or four-point support of the scooter when the kickstand is in its extended orientation, such as shown in Fig. 1. For purposes of: illustration, a kickstand that provides a four-point support of the scooter is shown in Fig. 4. In Fig. 1, a receiver 54 is shown formed in housing 38 and adapted to receive the kickstand when in its stowed orientation. Kickstand 52 may be pivotally mounted on body 12 by any suitable mechanism, which may include a spring or other mechanism to bias the kickstand to either its extended or its stowed configurations. Alternatively, the kickstand may rest against, or be at least partially housed within, the underside of the body when in its stowed orientation. It is also within the scope of the present invention that the scooter may be formed without a kickstand, or that the kickstand may be positioned elsewhere on the scooter, such as on supports 44 or adjacent rear wheel assembly 20.

Returning to Figs. 3 and 4, the scooter's steering assembly 14 may be seen in more detail. Steering assembly 14 enables a rider to steer the scooter from riding surface 22. As shown, steering assembly 14 includes a steering mechanism 60 and a steering column 62 that is coupled to a steerable wheel, which in the illustrated embodiment is front wheel 19. As shown, steering column 62 is coupled to a front fork 64 that includes a pair of mounts 66 for front wheel assembly 18.

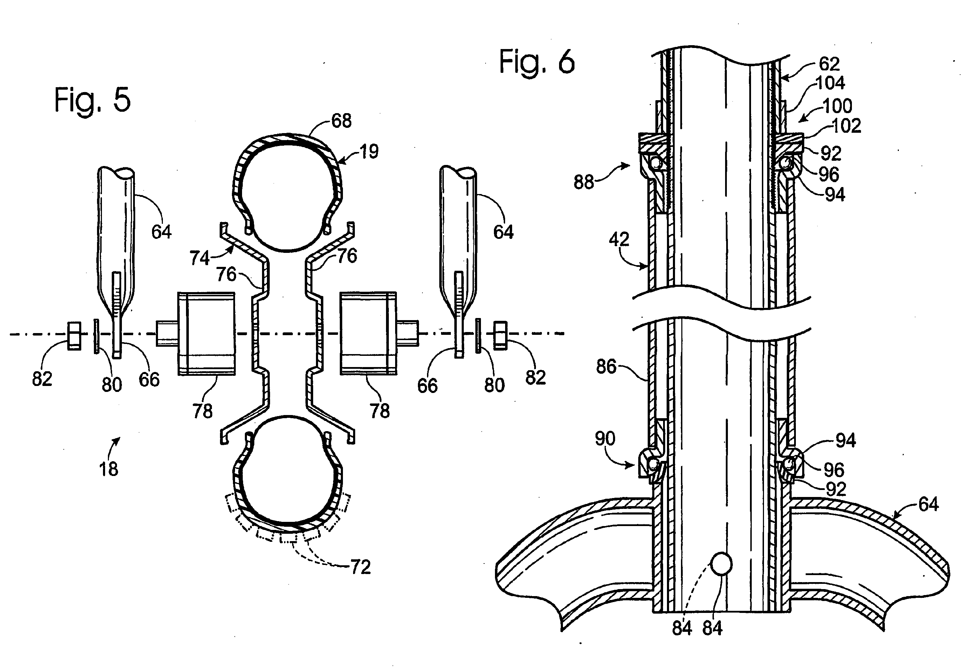

In Fig. 5, an illustrative embodiment of a suitable front wheel assembly 18 is shown in more detail. As shown, the assembly includes front wheel 19, which rotates about axle 30. In the illustrated embodiment, wheel 19 includes a deformable tire 68 that houses an inflatable tube 70, much like a conventional bicycle wheel. Tire 68 may be smooth or have any desired tread pattern on its outer surface, such as schematically illustrated in dashed lines at 72. Examples of other suitable constructions for wheel 19 include a solid wheel and a wheel that has a rigid or substantially rigid shell with an inner cavity.

Wheel 19 is supported on a hub 74, which as shown is formed from two halves 76 that are secured together by any suitable fastener, such as rivets, welding, bolts, clips, adhesives or the like. The wheel assembly further includes a pair of spacers 78, which position the hub between the front wheel assembly and mounts 66. Spacers 78 may be formed of one or more components sized to position wheel 19 between the mounts of front fork 64. Also shown in Fig. 5 are washers and nuts that may be mounted on the ends of the scooter's front axle, which is not shown in Fig. 5.

It should be understood that front wheel assembly 18 may take any suitable form that rotationally mounts a steerable wheel to the scooter's steering assembly. Typically, a front fork will be used, but it is within the scope of the invention that a mount that extends on only a single side of the wheel may be used. Similarly, the front wheel assembly may include a one-piece hub or a hub that is integrally formed with the wheel. Similarly, the front fork and/or hub may be shaped so that spacers are not required. An advantage of using the hub and spacer assembly shown in Fig. 5 is that the hub may be formed from two identical portions, namely halves 76. Similarly, the spacers may be of equal size, and therefore be identical to each other. This reduces the number of parts required for scooter 10, as well as the assembly time. Furthermore, the hub halves and spacers may be used for portions of rear wheel assembly 20, thereby further decreasing the number of components in scooter 10.

As discussed, front fork 64 is coupled to steering column 62 and adapted to rotate with the steering column responsive to rider-inputs to steering mechanism 60. The front fork and steering column are rotationally mounted on body 12 by head tube 42, which may have any suitable structure for mounting the front fork and steering column to the body for rotational movement with respect to the body. An example of a suitable construction is shown in Fig. 6. As shown, steering column 62 and front fork 64 include apertures 84 that may be used to secure the column and fork together with a single fastening mechanism when the corresponding apertures are aligned. Any suitable fastener, such as a pin, rivet, bolt or the like may be used. Similar, mounting configurations other than a pair of aligned apertures may be used and are within the scope of the invention.

In the illustrated embodiment, head tube 42 includes a sleeve 86 and upper and lower bearing assemblies 88 and 90. Each bearing assembly includes a bearing cup 92 extending from sleeve 86, a bearing race 94 and a plurality of bearings 96 that rotate within the track defined between the corresponding race and bearing cup. Also shown in Fig. 6 is a retainer 100 that is mounted on the steering column and which prevents the steering column from being withdrawn downward along the head tube. In the depicted embodiment, retainer 100 includes a spanner nut 102 and a clamp 104, which is tightened around the steering column.

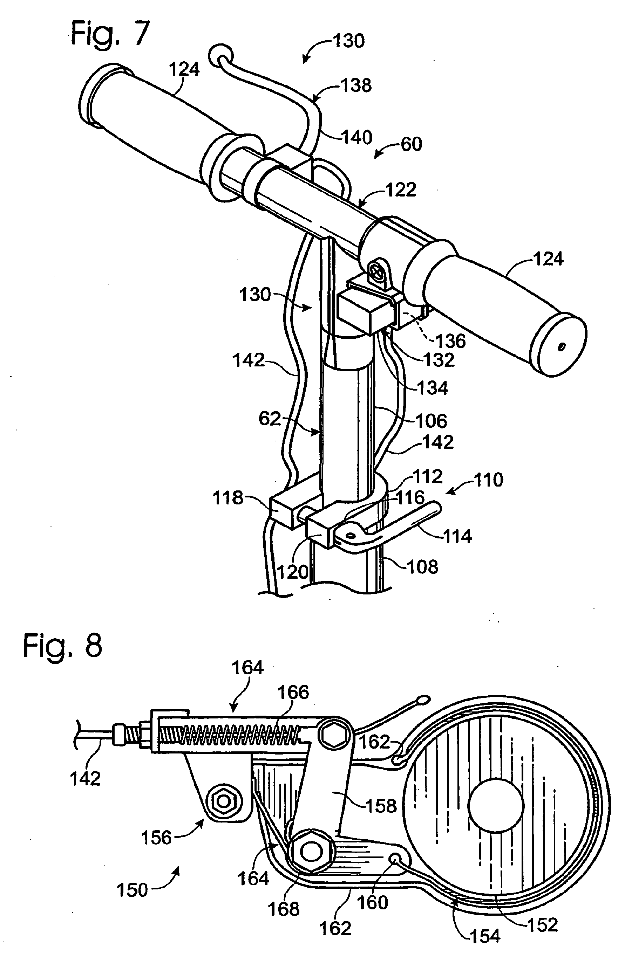

In Fig. 7, the scooter's steering column and steering mechanism are shown in more detail. In the illustrated embodiment, the length of steering column 62 is selectively adjustable by the rider, such as to adapt scooter 10 for use by riders of different heights or preferred riding styles. As shown, column 62 includes telescoping members 106 and 108, which are selectively positionable with respect to each other, and a fastening mechanism 110 that is adapted to releasably retain the members in a selected position with respect to each other. Any suitable mechanism may be used that enables the telescoping members to be selectively positioned relative to each other to adjust the height of the steering mechanism, and then selectively retained in the selected position. For example, the clamp shown in Fig. 4 proximate the head tube may also be used as a fastening mechanism 110 for the steering column. Similarly, it is within the scope of the invention that scooter 10 may be formed with a steering column that has a fixed height, instead of the adjustable steering column shown in the illustrated embodiment.

In Fig. 7, fastening mechanism 110 is a quick-release mechanism, which means that the mechanism may be released without requiring the rider to use tools, such as a screwdriver or wrench. As shown, the fastening mechanism includes a collar 112 that extends at least substantially around the upper telescoping member, and an actuator 114 that constricts the collar around member 108. In the illustrated embodiment, the actuator include a cam-portion 116 that draws the open ends 118 and 120 of the collar toward each other when the actuator is in the position shown in Fig. 7. When the actuator is pivoted in a clockwise direction (from the perspective of Fig. 7) around the steering column, the constricting force is released, and the ends are biassed sufficiently apart from each other that the upper telescoping member may be slid relative to the lower telescoping member to readjust the height of the steering mechanism relative to the scooter's body.

As discussed, steering mechanism 60 is adapted to be gripped by the rider to convey the rider's steering inputs to the front wheel. As shown, mechanism 60 includes a handlebar 122 with a pair of user-grippable regions 124, such as the handgrips shown in Fig. 7. It should be understood that steering mechanism 60 may take any suitable form that enables a rider positioned on surface 22 to steer at least one of the scooter's wheels. As other examples, the steering mechanism may take the form of a steering wheel or a pair of steering handles that are not mounted on a common handlebar.

Also shown in Fig. 7 are several user-input devices 130 that may be used by a rider to control the operation of the scooter. More specifically, Fig. 7 illustrates an example of a drive actuator 132. The drive actuator is any suitable mechanism by which a rider may selectively cause the scooter's drive assembly to provide driven, or powered, operation of the scooter. In the illustrated embodiment, drive actuator 132 takes the form of an on/off switch 134 that selectively energizes the scooter's drive assembly when the switch is depressed to its on position.

In Fig. 7, switch 134 includes a depressible button. It should be understood that any suitable switch may be used, including rocker switches, two-position switches, and switches that are biased to an off position and thereby require constant pressure by a rider to maintain the scooter's drive assembly in an energized state. To provide an example of a biased switch, switch 134 may include a biasing mechanism 136, such as a spring, inside or behind the button to bias the contacts away from each other unless the user exerts a stronger force on the button to force the contacts into engagement. Other suitable drive actuators include switches, throttles or other mechanisms that enable a rider to selectively adjust the degree to which the scooter's drive assembly is energized between more than simply an on and an off configuration. For example, one of the scooter's handgrips may incorporate a rotatable throttle that is used to select the degree to which the drive assembly is energized. As another example, the steering mechanism may include switches to select between two or more speeds of operation and/or forward and reverse directions of operation. It is also within the scope of the present invention that the drive actuator may be located elsewhere on the scooter, such as a depressible foot pedal or footswitch on the scooter's body, or a switch on the scooter's steering column. It may also be desirable to use a fail-safe switch or mechanism for drive actuator 132 so that the scooter's drive assembly will not be energized if the switch fails.

In Fig. 7, another user-input device 130 is shown, namely a brake actuator 138. The brake actuator is any suitable mechanism that upon actuation by a rider causes the scooter to slow down or stop. An example of a suitable brake actuator 138 is also shown in the form of a handbrake 140 that is drawn toward handlebar 122 by the rider to cause the scooter's drive assembly to be de-energized and/or to electrically and/or mechanically actuate a brake mechanism to slow the speed of the scooter. Scooter 10 will preferably include some form of brake actuator 138, although it is within the scope of the invention that brake actuator 138 may be positioned elsewhere on the scooter, such as in the positions discussed above with respect to the drive actuator, or that the brake actuator will be an automatically engaging actuator, as opposed to the manually actuated mechanism shown in Fig. 7. In such a configuration, the scooter's wiring harness may be configured to automatically engage a brake mechanism if the scooter's drive assembly is not energized. Alternatively, or additionally, the brake actuator may be configured to automatically de-energize the drive assembly upon actuation.

Finally, in Figs. 7 and 4, cables 142 are shown extending from the brake and drive actuators. Cables 142 are any suitable electrical wire, cable, linkage or the like that mechanically and/or electrically conveys a rider-imparted input to the actuators to a corresponding portion of the scooter's drive assembly and/or brake mechanism. In Fig. 7, it can be seen that the cables extend external the steering column. It is within the scope of the invention that the cables may extend within the steering column instead of the illustrated position in which the cables extend from the steering mechanism external the steering column. For purposes of illustration, scooter 10 is shown without external cables and without a manually actuated brake actuator on handlebar 122 in Figs. 2 and 3.

As mentioned above, brake actuator 138 may be connected to a brake mechanism that acts upon the scooter's drive assembly to slow the speed of the scooter. An example of a suitable brake mechanism is a mechanical brake mechanism that slows the speed of rotation of one or more of the scooter's wheels. Another suitable brake mechanism is an electrical brake mechanism that electrically interacts with the scooter's drive assembly to slow the scooter. In Fig. 8, an illustrative example of a mechanical brake mechanism is shown and generally indicated at 150. Brake mechanism 150 includes a brake drum 152 that is mounted on rear wheel assembly 20 and which rotates with the rear wheel. Therefore, rotation of the rear wheel causes the brake drum to rotate with rear wheel 21 and the rear wheel to rotate with the brake drum. Mechanism 150 further includes a band 154 that extends around the brake drum, and a lever assembly 156 that selectively cinches the band around the brake drum to slow or stop the scooter, such as responsive to rider-actuation of the brake actuator or responsive to the drive assembly being de-energized.

As shown, lever assembly 156 communicates with brake cable 142, either directly or indirectly through an intermediate linkage to convey rider-inputs to the lever assembly. As shown, the brake cable is coupled to a lever arm 158 that is coupled to one end 160 of the brake band. The lever arm is pivotally mounted on a brake housing 162, to which the other end 162 of the brake band is also mounted. When a rider actuates the brake actuator, such as by drawing the actuator toward handlebar 122, the brake cable is drawn away from the brake housing, thereby pivoting lever arm 158 away from the brake drum. Because the lever arm is connected to one end of the brake band, this movement cinches the brake band around the brake drum, thereby creating a frictional force that slows the rate of rotation of the brake drum and, correspondingly, the rate of rotation of rear wheel 21.

Also shown in the illustrated embodiment are biasing mechanisms 164 that bias the brake mechanism to its non-braking orientation, in which rear wheel 21 may free wheel or be rotationally driven. More specifically, a compression spring 166 and a torsion spring 168 are shown positioned to urge the lever arm toward a position where the brake band is not cinched around the brake drum, which in the illustrated embodiment is toward the brake drum. Typically, a mechanical brake mechanism will include at least one biasing mechanism so that the brake mechanism is automatically released when the rider releases the brake actuator. It should be understood that other suitable biasing mechanisms may be used, and similarly, that brake mechanism 150 may have other configurations, such as configurations that utilize conventional bicycle brake mechanisms or disc-type brake mechanisms.

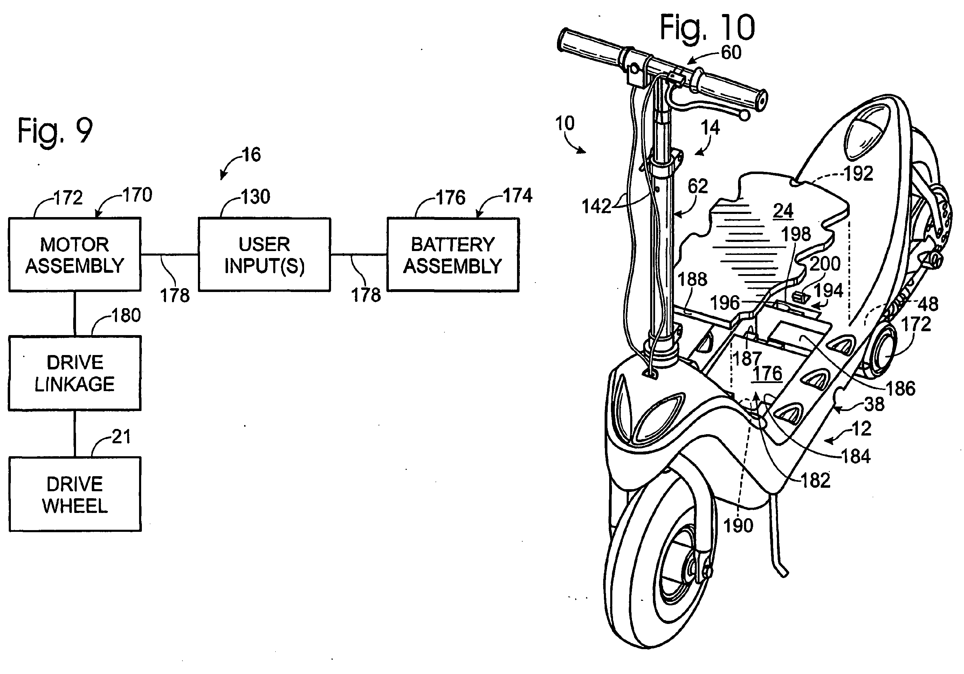

In Fig. 9, the drive assembly of scooter 10 is schematically illustrated. As shown, drive assembly 16 includes a motor assembly 170 that includes at least one motor 172 adapted to drive the rotation of one or more driven wheels. As discussed above, the illustrated scooter includes a driven rear wheel 21, although more than one driven wheel, including more than one driven rear wheel, are within the scope of the invention. The drive assembly further includes a battery assembly 174, which includes at least one battery 176 adapted to provide power to the motor assembly. Any suitable type of battery may be used, including rechargeable batteries. Examples of suitable batteries include one or more six-, twelve- or eighteen-volt batteries. The drive assembly further includes at least one user-input device 130 through which the rider may control the actuation of the scooter's motor assembly. Examples of suitable user-input devices are the drive actuator and brake actuator discussed above. Others include switches, levers or other mechanisms through which a rider may configure the scooter's drive assembly to drive the scooter in different directions or at different speeds. For example, a reversing switch may reverse the configuration of the battery assembly and the motor assembly to drive the motor assembly's rotational output in a reverse direction, thereby enabling the scooter to be driven in reverse. Similarly, when the battery and/or motor assembly respectively include two or more batteries or motors, these batteries and/or motors may be switched between parallel and series configurations, such as responsive to rider inputs to devices 130, to provide more than one defined speed for the scooter.

The battery assembly, motor assembly and user inputs communicate with each other via any suitable linkage, which is schematically illustrated in Fig. 9 at 178. Examples of suitable linkages include one or more of a wiring harness, direct electrical and/or mechanical coupling and a mechanical linkage. Also shown in Fig. 9 is a drive linkage 180 that drivingly connects the rotational output of the motor assembly, such as an output shaft, output gear or output pinion, with the scooter's driven wheel or wheels, such as rear wheel 21. Drive linkage 180 may include any suitable mechanical linkage adapted to convey a rotational input from motor assembly 170 to drive the rotation of drive wheel 21. An example of a suitable drive linkage is a gearbox containing one or more gears, which in some embodiments may be adapted to increase or decrease the relative rate of rotation of the drive wheel with respect to the rate of rotation of the rotational output of the motor assembly. Another example is a direct linkage between the motor assembly and the drive wheel. Yet another example is a pulley or chain that transmits a rotational input from the output of the motor assembly to the drive wheel (or wheels).

Drive assembly 16 will typically be at least partially mounted on, contained within, or otherwise supported by the body of the scooter. An example of such a configuration is shown in Fig. 10, in which motor 172 is shown mounted on mount 48. As another illustrative example, body 12 is shown containing an internal compartment 182 with an opening 184 through which objects may be inserted into and removed from the compartment. In Fig. 10, a battery 176 is shown contained in the compartment. In the illustrated embodiment, a connector 186 is shown electrically connecting the battery to the scooter's drive assembly. Battery 176 may be freely positionable within compartment 182, or alternatively the body may include a battery retainer that is adapted to retain the battery within the compartment, and preferably, in a defined position within the compartment. For example, the compartment may include a recess into which the battery is received and/or a strap or other projection that is removably positioned across the battery to prevent unintentional repositioning or removal of the battery. In the illustrated embodiment, the scooter's footboard 24 provides a removable cover for the compartment, and as such prevents the unintentional removal of the battery from the compartment. Compartment 182 may also be used to store other objects placed into the compartment by the rider. For example, a charger 187 for battery 176 is shown in Fig. 10. It is within the scope of the invention that battery 176 may be mounted elsewhere on the scooter, with the scooter still including compartment 182 for storing objects.

Footboard 24 may be secured to the body by any suitable fastening mechanism. When the footboard provides a cover for compartment 182, the mechanism should be adapted to permit the footboard to be removed and replaced. Examples of suitable fastening mechanisms are mechanisms such as screws that require a tool to be removed, and mechanisms, such as releasable clasps or clips, which do not require tools to release the footboard. In the illustrated embodiment, the footboard includes a lip 188 that is received into a corresponding slot or groove 190 in the body, and a detent 192 that is selectively engaged by a lock mechanism 194 on the body to retain the footboard in the position shown in Fig. 1.

In Fig. 10, an example of a suitable lock mechanism is shown. The lock mechanism includes a catch 196 that is selectively moved between an engaged position, in which the catch extends into a passage 198 in body 12 and engages detent 192 to retain the footboard on the body, and a disengaged position, in which the catch is removed from engagement with the footboard and the footboard may be removed from the body. In Fig. 10, a user-manipulable element 200 is shown extending from body 12. As element 200 is moved away from footboard 24, catch 196 is withdrawn sufficiently out of passage 198 to release detent 192 and thereby permit the footboard to be removed from the body. As discussed above, any suitable fastening mechanism may be used. An advantage of the illustrated mechanism is that it does not require the rider to use tools to remove the footboard. Detent 192 and catch 196 may take any suitable form in which the catch may selectively engage the detent to prevent removal of the footboard until the catch disengages the detent.

In Figs. 11-13, the scooter is shown with cover portions removed such that the rear wheel assembly 20 and portions of drive assembly 16 are shown in more detail. Figures 11 to 13 show the cover assembly removed to show various underlying details. The cover assembly is part of the invention as claimed. (Figures 14 to 16 show the same scooter with the cover portions attached). For example, rear wheel 20 is shown including a hub 202 formed from halves 76 and 204, and rear wheel assembly 20 is shown including spacers 78, 205 and 206 that maintain the rear wheel between mounts 46. Also shown is a rear suspension 208, which is adapted to support rear portion 28 above rear wheel 21. As shown, suspension 208 extends between supports 44 and rear portion 28 to maintain a spaced-apart relationship between surface 36 and rear wheel 21.

In Fig. 13, an example of a suitable drive linkage 180 is shown and includes a belt 210 that extends around an output 212 of motor assembly 170 and a receiver 213 on rear wheel assembly 20 that drives the rotation of rear wheel 21 responsive to rotation of the belt by output 212. An example of a suitable receiver 213 is a ring gear 214 formed on hub 202. Belt 210 transmits a rotational input to the rear wheel from the rotational output of the motor assembly to cause the rear wheel to be rotationally driven. Belt 210 may be formed of any suitable material capable of transmitting a rotational input from the motor assembly to the rear wheel assembly to drive the rotation of rear wheel 21. Examples of suitable belts 210 include a rubber or synthetic band and a chain formed of interconnected links. In the illustrated embodiment, gear 214 includes a plurality of teeth 216 that are adapted to frictionally grip the belt. It should be understood that any suitable tooth profile may be used, and that gear 214 may alternatively be formed without teeth 216.

It should be understood that belts tend to wear over time, and therefore conventionally require the rear wheel to be positioned on supports 44 to retain sufficient tension in the belt to drive the rotation of the rear wheel responsive to the rotational output of the scooter's motor assembly. In the illustrated embodiment, however, the drive linkage includes a tensioner 218 that maintains tension on the belt even if the belt stretches over time. As shown, tensioner 218 includes a belt-contacting member 220 that is biased against the belt by a suitable biasing mechanism 222, such as a coil spring 224, leaf spring or the like. Tensioner 218 enables rear wheel assembly 20 to be mounted in a fixed position relative to supports 44, instead of requiring an adjustable mounting position, such as used to mount the rear wheels of bicycles. Although the above-described tensioner is preferred, it is within the scope of the invention that the drive linkage may be formed without a tensioner and that mounts 46 may permit the relative position of the rear wheel assembly to be adjusted within a range of positions, such as providing an elongate slot within which axle 32 may be selectively positioned.

In Figs. 11-13, the scooter is shown with cover portions removed to shown the drive assembly 16 is shown with an exposed brake mechanism 150, driven wheel hub 202 and drive linkage 180. By "exposed," it is meant that the components may be touched or otherwise contacted by a rider or other individual without requiring the user to dismantle, destroy or otherwise disassemble the scooter. It is within the scope of the invention that scooter 10 may be formed with any or all of these components exposed, such as shown in Figs. 11-13 provided that the cover assembly 232 is adapted to shield the drive linkage 180 such that the drive linkage 180 is inaccessible to physical contact by the rider or any other individual, and further wherein the cover assembly 232 encloses the belt 210 to prevent access thereto from external the scooter 10 by a rider's fingers.

In Figs. 14-16, however, the scooter is shown with these components shielded by a cover assembly, and therefore inaccessible to physical contact by a rider or other individual unless the shielding portion is removed. A benefit of shielding these components is that riders and other individuals, who many be children, are protected from injury that would be caused if the individual touches these components while the scooter is being driven. Individuals are similarly protected if they otherwise come into contact with these components while the scooter is being driven, such as if a rider crashes or drives into another individual.

For example, as shown in Figs. 14 and 15, brake mechanism 150 and left half 76 of rear hub assembly 202 are shielded by a cover assembly 230 that includes a housing 234, which defines an at least substantially closed perimeter with rear wheel 21 or hub assembly 202. By "at least substantially closed perimeter," it is meant that the cover housing sufficiently encloses the brake mechanism and hub so that an individual cannot readily (or cannot at all) contact these components from external the scooter. The cover assembly may also be described as at least substantially, or completely, enclosing the shielded components described herein, either alone or in combination with the rear wheel. It is within the scope of the invention that there may be a small passage between the housing and the rear wheel or rear hub, but this passage should preferably be sized so that it is sufficiently small so that a user's finger cannot fit therethrough. Alternatively, housing 234 may define a completely closed perimeter with rear wheel 21 or hub half 76. In Fig. 15, housing 234 is shown including several removable cover plates 236 and 238. The cover plates may be temporarily removed to provide access to the scooter's motor assembly and brake mechanism without requiring the entire cover assembly to be removed. Housing 234 may alternatively be formed without any removable cover plates.

In Figs. 14 and 16, drive linkage 180 and right half 204 of rear hub assembly 202 are shielded by a corresponding cover assembly 232. Assembly 232 includes a housing 244 that defines an at least substantially, or a completely, closed perimeter with rear wheel 21 or hub half 204. When scooter 10 includes cover assemblies on each side of its drive wheel, the cover assemblies may each enclose their respective portions of the drive wheel and drive assembly, or alternatively, they may extend into contact with each other to further shield these components from contact from the underside of the scooter. As shown in Figs. 15 and 16, cover assemblies 230 and 232 form a lower surface 240 that prevents an individual from physically contacting the drive linkage, brake mechanism and tensioner from the underside of the scooter. Also shown in Figs. 15 and 16 are portions 242 of housings 234 and 244 that simulate portions of full-sized scooters or motorcycles that are powered by gasoline-powered engines. Portions 242 typically will only be present on an embodiment of scooter 10 sized for use by children, and the housings may be formed without these portions.

In Fig. 16, housing 244 is shown with an aperture 246 that permits access to the right half of hub assembly 202. Aperture 246 may be used when rear wheel 21 is an inflatable wheel with a nozzle 248 through which air is selectively added or removed from the wheel. Alternatively, aperture 246 may be shielded by a cover plate, and further alternatively, the housing may be formed without the aperture. In the illustrated embodiment, even though the housing includes an aperture, it still provides an at least substantially, if not completely, closed perimeter with respect to drive belt 210 and gear 214 because the housing includes a rim 250 extending toward, or alternatively into contact with rear wheel 21 or hub assembly 202.

### Industrial Applicability

The present invention is applicable to any battery-powered vehicle, including battery-powered children's vehicles, and especially to battery-powered scooters.

The specific embodiments set forth above and illustrated herein are not to be considered in a limiting sense as numerous variations are possible within the scope of the following claims.

## Claims

1. A scooter (10), comprising:
a body (12) with a riding surface (22) adapted to support a rider;
a steering assembly (14) rotationally mounted on the body (12) and coupled to a steerable wheel (19);
a rear wheel assembly (20) including a drive wheel (21) rotationally mounted on the body;
a drive assembly (16) including a motor assembly (170) with a rotational output (212) coupled to the drive wheel (21) by a drive linkage (180) and a battery assembly (176) adapted to power the motor assembly (170), wherein the drive linkage (180) includes a belt (210) extending around portions of the rear wheel assembly (20) and the output (212) of the motor assembly to drive the rotation of the rear wheel assembly (20) responsive to rotation of the output (212) of the motor assembly; and
a cover assembly (232);
**characterised in that** the cover assembly (232) is adapted to shield the drive linkage (180) such that the drive linkage (180) is inaccessible to physical contact by the rider or other individual, and further wherein the cover assembly (232) encloses the belt (210) to prevent access thereto from external the scooter (10) by a rider's fingers.

2. The scooter of claim 1, wherein the cover assembly (232) is adapted to provide an at least substantially closed perimeter with the drive wheel (21) to enclose the belt (210), and optionally wherein the cover assembly is adapted to provide a completely closed perimeter with the drive wheel (21) to enclose the belt (210).

3. The scooter of claim 1 or 2, wherein the drive wheel (21) includes a hub (202), and further wherein the cover assembly extends from proximate the hub (202), around the belt (210) and back toward the hub (202) to at least substantially enclose the belt (210).

4. The scooter of any preceding claim, wherein the drive wheel (21) includes first and second sides separated by a tread region, wherein the sides respectively include first and second generally opposed portions of a hub (202), and further wherein the cover assembly is adapted to at least substantially enclose both the first (204) and the second (76) generally opposed portions of the hub (202).

5. The scooter of claim 4, wherein the first portion (204) of the hub includes a gear (214) adapted to be drivingly engaged by the drive linkage (180) and further wherein the cover assembly also at least substantially encloses the gear (214).

6. The scooter of any preceding claim, wherein the drive assembly (16) further includes a brake mechanism (150) adapted to slow the rotation of the drive wheel.

7. The scooter of claim 6, wherein the cover assembly is further adapted to provide an at least substantially closed perimeter with the drive wheel (21) to enclose the brake mechanism (150) and prevent access thereto, and optionally the cover assembly is adapted to provide a completely closed perimeter with the drive wheel to enclose the brake mechanism.

8. The scooter of claims 6 or 7 when dependent on claim 5, wherein the brake mechanism (150) is adapted to selectively engage the second portion (76) of the hub.

9. The scooter of any preceding claim, wherein the drive linkage (180) further includes a belt tensioner (218) biased against the belt (210) to provide tension in the belt (210).

10. The scooter of any preceding claim, wherein the cover assembly includes at least one removable cover plate to allow access to the drive assembly (16) without having to remove the cover assembly.

11. The scooter of any preceding claim, wherein the scooter (10) is adapted to support a standing rider, and further wherein the riding surface (22) includes a footboard (24) that is adapted to support a rider's feet as the rider stands upon the footboard (24) while operating the scooter.

12. The scooter of any preceding claim, wherein the body (12) further includes a storage compartment (182) and optionally wherein at least a portion of the battery assembly is contained in the storage compartment.

13. The scooter of claim 12 when dependent on claim 11, wherein the storage compartment (182) is located on the body (12) beneath the footboard (24) and optionally the footboard (24) is adapted to provide a removable cover for the storage compartment (182),

14. The scooter of any preceding claim, wherein the body (12) is a reduced-scale body sized for use by a child, and optionally wherein the body includes a housing formed of moulded plastic.

## Patentansprüche

1. Roller (10), umfassend:
- einen Körper (12) mit einer Fahrfläche (22), die dafür angepasst ist, einen Fahrer zu tragen;
- eine Steueranordnung (14), die drehbar an demn Körper (12) montiert ist und mit einem steuerbaren Rad (19) gekoppelt ist;
- eine Hinterrad-Anordnung (20), die ein Antriebsrad (21) einschließt, das drehbar an dem Körper montiert ist,
- eine Antriebsanordnung (16), die eine Motoranordnung (170) mit einem Rotationsausgeber (212), der mit dem Antriebsrad (21) über eine Antriebskoppelung (180) gekoppelt ist, und eine Batterieanordnung (176) einschließt, die dafür angepasst ist, die Motoranordnung (170) mit Energie zu versorgen, worin die Antriebskoppelung (180) einen Riemen (210) einschließt, der sich um Abschnitte der Hinterrad-Anordnung (20) und den Ausgeber (212) der Motoranordnung erstreckt und so die Umdrehung der Hinterrad-Anordnung (20) in Reaktion auf eine Umdrehung des Ausgebers (212) der Motoranordnung antreibt; und
- eine Abdeck-Anordnung (232);
**dadurch gekennzeichnet, dass** die Abdeck-Anordnung (232) dafür angepasst ist, die Antriebskoppelung (180) so abzuschirmen, dass die Antriebskoppelung (180) einem physischen Kontakt seitens des Fahrers oder einer anderen Person nicht zugänglich ist, und weiter worin die Abdeck-Anordnung (232) den Riemen (210) einschließt und so einen Zugang dazu von außerhalb des Rollers (10) durch Finger eines Fahrers verhindert.

2. Roller nach Anspruch 1, worin die Abdeck-Anordnung (232) dafür angepasst ist, eine wenigstens im Wesentlichen geschlossene Umfassung mit dem Antriebsrad (21) unter Einschluss des Riemens (210) bereitzustellen, und gegebenenfalls worin die Abdeck-Anordnung dafür angepasst ist, eine vollständig geschlossene Umfassung mit dem Antriebsrad (21) unter Einschluss des Riemens (210) bereitzustellen.

3. Roller nach Anspruch 1 oder 2, worin das Antriebsrad (21) eine Nabe (202) einschließt und weiter worin sich die Abdeck-Anordnung von einer Stelle benachbart der Nabe (202) um den Riemen (210) herum und zurück in Richtung auf die Nabe (202) erstreckt und so wenigstens im Wesentlichen den Riemen (210) einschließt.

4. Roller nach irgendeinem vorangehenden Anspruch, worin das Antriebsrad (21) eine erste und eine zweite Seite einschließt, die durch einen Laufflächen-Bereich getrennt sind, worin die Seiten jeweils erste und zweite allgemein einander gegenüber liegende Teile einer Nabe (202) einschließen, und weiter worin die Abdeck-Anordnung dafür angepasst ist, wenigstens im Wesentlichen sowohl den ersten (204) als auch den zweiten (76) allgemein einander gegenüber liegenden Abschnitt der Nabe (202) einzuschließen.

5. Roller nach Anspruch 4, worin der erste Teil (204) der Nabe ein Antriebsritzel (214) einschließt, das dafür angepasst ist, antriebsmäßig von der Antriebskoppelung (180) in Eingriff genommen zu werden, und weiter worin die Abdeck-Anordnung wenigstens im Wesentlichen auch das Antriebsritzel (214) umschließt.

6. Roller nach irgendeinem vorangehenden Anspruch, worin die Antriebs-Anordnung (16) weiter einen Bremsen-Mechanismus (150) einschließt, der dafür angepasst ist, die Umdrehung des Antriebsrads zu verlangsamen.

7. Roller nach Anspruch 6, worin die Abdeck-Anordnung weiter dafür angepasst ist, eine wenigstens im Wesentlichen geschlossene Umfassung mit dem Antriebsrad (21) bereitzustellen und so den Bremsenmechanismus (150) zu umschließen und einen Zugang dazu zu verhindern, und gegebenenfalls worin die Abdeck-Anordnung dafür angepasst ist, eine im Wesentlichen vollständig geschlossene Umfassung mit dem Antriebsrad unter Umschließen des Bremsenmechanismus bereitzustellen.

8. Roller nach den Ansprüchen 6 oder 7, wenn abhängig von Anspruch 5, worin der Bremsenmechanismus (150) dafür angepasst ist, selektiv mit dem zweiten Abschnitt (76) der Nabe in Eingriff zu kommen.

9. Roller nach irgendeinem vorangehenden Anspruch, worin die Antriebskopplung (180) weiter einen Riemen-Spanner (218) einschließt, der gegen den Riemen (210) gespannt ist und so für Spannung in dem Riemen (210) sorgt.

10. Roller nach irgendeinem vorangehenden Anspruch, worin die Abdeck-Anordnung wenigstens eine entfernbare Abdeckplatte einschließt und so Zugang zu der Antriebs-Anordnung (16) erlaubt, ohne dass man die Abdeck-Anordnung entfernen muss.

11. Roller nach irgendeinem vorangehenden Anspruch, worin der Roller (10) dafür angepasst ist, einen stehenden Fahrer zu tragen, und weiter worin die Fahrfläche (22) ein Fußbrett (24) einschließt, das dafür angepasst ist, die Füße eines Fahrers zu tragen, wenn der Fahrer auf der Fußplatte (24) steht, während er den Roller betreibt.

12. Roller nach irgendeinem vorangehenden Anspruch, worin der Körper (12) weiter ein Staufach (182) einschließt, und gegebenenfalls worin wenigstens ein Teil der Batterie-Anordnung in dem Staufach enthalten ist.

13. Roller nach Anspruch 12, wenn abhängig von Anspruch 11, worin das Staufach (182) auf dem Körper (12) unter der Fußplatte (24) angeordnet ist, und gegebenenfalls worin die Fußplatte (24) dafür angepasst ist, eine entfernbare Abdeckung für das Staufach (182) bereitzustellen.

14. Roller nach irgendeinem vorangehenden Anspruch, worin der Körper (12) ein Körper mit verkleinertem Maßstab ist, der größenmäßig zur Verwendung durch ein Kind ausgerichtet ist, und gegebenenfalls worin der Körper ein Gehäuse einschließt, das aus Formkunststoff geformt ist.

## Revendications

1. Une trottinette (10), comportant :
un corps (12) avec une surface de conduite (22) adaptée pour supporter un conducteur ;
un ensemble de direction (14) monté en rotation sur le corps (12) et couplé à une roue directrice (19) ;
un ensemble de roue arrière (20) comportant une roue motrice (21) montée en rotation sur le corps;
un ensemble d'entraînement (16) comprenant un ensemble moteur (170) avec une sortie de rotation (212) couplée à la roue motrice (21) par des moyens de liaison d'entraînement (180) et un ensemble batterie (176) adapté pour alimenter en énergie l'ensemble moteur (170), où les moyens de liaison d'entraînement (180) comportent une courroie (210) s'étendant autour de parties de l'ensemble de roue arrière (20) et de la sortie de rotation (212) de l'ensemble moteur pour entraîner en rotation l'ensemble de roue arrière (20) en réponse à la rotation de la sortie de rotation (212) de l'ensemble moteur ; et
un ensemble couvercle (232) ;
**caractérisée en ce que** l'ensemble couvercle (232) est adapté pour protéger les moyens de liaison d'entraînement (180) de façon que les moyens de liaison d'entraînement (180) ne soient pas accessibles par le conducteur ou tout autre individu par contact physique, et où en outre l'ensemble couvercle (232) enferme la courroie (210) pour empêcher le conducteur d'y accéder avec les doigts depuis l'extérieur de la trottinette (10).

2. La trottinette selon la revendication 1, où l'ensemble couvercle (232) est adapté pour réaliser un périmètre au moins sensiblement fermé autour de la roue motrice (21) pour enfermer la courroie (210), et optionnellement où l'ensemble couvercle (232) est adapté pour réaliser un périmètre complètement fermé autour de la roue motrice (21) pour enfermer la courroie (210).

3. La trottinette selon l'une des revendications 1 et 2, où la roue motrice (21) comporte un moyeu (202), et où en outre l'ensemble couvercle (232) s'étend à partir de la proximité du moyeu (202), autour de la courroie (210) et revient vers le moyeu (202) pour au moins sensiblement enfermer la courroie (210).

4. La trottinette selon l'une quelconque des revendications précédentes, où la roue motrice (21) comporte des premier et second côtés séparés par une bande de roulement, où les côtés comportent respectivement des première et seconde parties d'un moyeu (202) généralement opposées, et où en outre l'ensemble couvercle est adapté pour au moins sensiblement enfermer à la fois les deux première (204) et seconde (76) parties généralement opposées du moyeu (202).

5. La trottinette selon la revendication 4, où la première partie (204) du moyeu comporte un pignon (214) adapté pour être entraîné par les moyens de liaison d'entraînement (180) et où en outre l'ensemble couvercle enferme également au moins sensiblement le pignon (214).

6. La trottinette selon l'une quelconque des revendications précédentes, où l'ensemble d'entraînement (16) comporte en outre un mécanisme de freinage (150) adapté pour ralentir la rotation de la roue motrice.

7. La trottinette selon la revendication 6, où l'ensemble couvercle (232) est en outre adapté pour réaliser un périmètre au moins sensiblement fermé autour de la roue motrice (21) pour enfermer le mécanisme de freinage (150) et pour empêcher l'accès à celui-ci, et où optionnellement l'ensemble couvercle est adapté pour réaliser un périmètre complètement fermé autour de la roue motrice pour enfermer le mécanisme de freinage.

8. La trottinette selon l'une des revendications 6 et 7 quand elle dépend de la revendication 5, où le mécanisme de freinage (150) est adapté pour coopérer sélectivement avec la deuxième partie (76) du moyeu.

9. La trottinette selon l'une quelconque des revendications précédentes, où les moyens de liaison d'entraînement (180) comportent en outre un tendeur de courroie (218) appuyant élastiquement sur la courroie (210) pour tendre la courroie (210).

10. La trottinette selon l'une quelconque des revendications précédentes, où l'ensemble couvercle comporte au moins un couvercle amovible pour permettre l'accès à l'ensemble d'entraînement (16) sans avoir à enlever l'ensemble couvercle.

11. La trottinette selon l'une quelconque des revendications précédentes, où la trottinette (10) est adaptée pour supporter un conducteur se tenant debout, et où en outre la surface de conduite (22) comporte un repose pieds (24) qui est adapté pour supporter les pieds d'un conducteur lorsque le conducteur se tient debout sur le repose pieds (24) tout en conduisant la trottinette.

12. La trottinette selon l'une quelconque des revendications précédentes, où le corps (12) comporte en outre un compartiment de rangement (182) et optionnellement où au moins une partie de l'ensemble batterie est contenue dans le compartiment de rangement.

13. La trottinette selon la revendication 12 quand elle dépend de la revendication 11, où le compartiment de rangement (182) est situé sur le corps (12) sous le repose pieds (24) et optionnellement où le repose pieds (24) est adapté pour constituer un couvercle amovible pour le compartiment de rangement (182).

14. La trottinette selon l'une quelconque des revendications précédentes, où le corps (12) est un corps à échelle réduite d'une dimension pour un usage par un enfant, et optionnellement où le corps comporte un carénage réalisé en plastique moulé.
